# EUROPÄISCHE PATENTSCHRIFT

(11) **EP 2 938 524 B1**
(45) Veröffentlichungstag und Bekanntmachung des Hinweises auf die Patenterteilung: **08.02.2023**
(21) Anmeldenummer: 13805341.8
(22) Anmeldetag: 11.12.2013
(51) Int. Cl.: B60S 1/52

(54) **WISCHVORRICHTUNG ZUM AUFTRAGEN VON WISCHWASSER**
WIPER DEVICE FOR APPLYING WASHING WATER
SYSTÈME D'ESSUIE-GLACE POUR L'APPLICATION D'EAU DE LAVAGE

(30) Priorität: 28.12.2012 DE 102012224475; 08.05.2013 DE 102013208576
(43) Veröffentlichungstag der Anmeldung: 04.11.2015
(73) Patentinhaber: Robert Bosch GmbH, 70442 Stuttgart (DE)
(72) Erfinder: RAPP, Harald, 77815 Buehl (DE); KRUSE, Michael, 77815 Buehl (DE)
(86) Internationale Anmeldenummer: PCT/EP2013/076164
(87) Internationale Veröffentlichungsnummer: WO 2014/102061

(56) Entgegenhaltungen:
- WO-A1-2011/038913
- DE-A1- 4 415 081
- DE-A1- 19 914 122
- DE-A1-102004 007 351
- DE-A1-102011 012 533
- JP-U- S51 121 933
- US-A- 4 922 570
- US-A- 5 203 049
- US-A- 5 433 382

## Beschreibung

### Stand der Technik

Es ist bereits eine Wischvorrichtung mit einer Düseneinheit, die zur Anordnung an einem Wischarm und zum Auftragen von Waschwasser auf eine Fahrzeugscheibe vorgesehen ist, vorgeschlagen worden. Weiterer Stand der Technik ist aus der JP S51 121933 U bekannt. Dokument DE 10 2004 007351 A1 offenbart eine Wischvorrichtung gemäß dem Oberbegriff des Anspruchs 1.

### Offenbarung der Erfindung

Die Erfindung geht aus von einer Wischvorrichtung mit einer Düseneinheit gemäß Anspruch 1, die zur Anordnung an einem Wischarm und zum Auftragen von Waschwasser auf eine Fahrzeugscheibe vorgesehen ist.

Es wird vorgeschlagen, dass die Düseneinheit dazu vorgesehen ist, in einem Betriebszustand Waschwasser beidseitig von einem am Wischarm befestigten Wischblatt auf die Fahrzeugscheibe aufzutragen, wodurch ein besonders gutes Wischergebnis bei gleichzeitig niedrigem Waschwasserverbrauch erzielt werden kann. Unter einer "Düseneinheit" soll in diesem Zusammenhang insbesondere eine Einheit verstanden werden, die zumindest ein Düsenelement umfasst. Bevorzugt umfasst die Düseneinheit zumindest zwei Düsenelemente. Unter einem "Düsenelement" soll in diesem Zusammenhang insbesondere ein Element verstanden werden, das dazu vorgesehen ist, Waschwasser auszubringen, beziehungsweise in eine bestimmte Richtung zu sprühen. Insbesondere weist das Düsenelement zumindest eine Düsenöffnung auf, die ein Waschwassersystem zu einer Umgebung hin öffnet. Das Düsenelement kann aus einem Metall und/oder besonders vorteilhaft aus einem Kunststoff hergestellt sein. Bevorzugt ist das Düsenelement dazu vorgesehen, mit einem Waschwasserschlauch gekoppelt zu werden. Unter "beidseitig von einem Wischblatt" soll in diesem Zusammenhang insbesondere auf zwei am Wischblatt angrenzenden Seiten, die sich gegenüberliegen beziehungsweise von dem Wischblatt getrennt sind, verstanden werden. Insbesondere erstreckt sich eine Trennlinie zwischen den beiden Seiten entlang einer Längserstreckung des Wischblatts. Unter "Waschwasser" soll in diesem Zusammenhang insbesondere eine zum Waschen und/oder Reinigen einer Fahrzeugscheibe geeignete Flüssigkeit verstanden werden, wie insbesondere Wasser, Alkohole oder Gemische, die einen Wasseranteil, Frostschutzanteil und/oder Alkoholanteil aufweisen. Unter "vorgesehen" soll insbesondere speziell ausgelegt und/oder ausgestattet verstanden werden.

In einer weiteren Ausgestaltung der Erfindung wird vorgeschlagen, dass die Wischvorrichtung zumindest einen ersten Waschwasserschlauch umfasst, der an zumindest einem ersten Düsenelement der Düseneinheit angeordnet ist, wodurch auf eine einfache Weise Waschwasser zum ersten Düsenelement geführt werden kann. Unter einem "Waschwasserschlauch" soll in diesem Zusammenhang insbesondere ein rohrförmiges Element verstanden werden, das dazu vorgesehen ist, Waschwasser zu leiten. Bevorzugt ist der Waschwasserschlauch flexibel und/oder elastisch ausgebildet.

Vorteilhaft weist die Wischvorrichtung zumindest einen zweiten Waschwasserschlauch auf, der an zumindest einem zweiten Düsenelement der Düseneinheit angeordnet ist, wodurch Waschwasser vorteilhaft unabhängig an das eine erste Düsenelement und das zumindest eine zweite Düsenelement geführt werden kann.

Ferner wird vorgeschlagen, dass das zumindest eine erste Düsenelement und das zumindest eine zweite Düsenelement dazu vorgesehen sind, an gegenüberliegenden Wischarmseiten angeordnet zu werden. Unter einer "Wischarmseite" soll in diesem Zusammenhang insbesondere eine Seite beziehungsweise Schürze eines Wischarms verstanden werden, die von einer Deckseite des Wischarms zumindest im Wesentlichen orthogonal abgewinkelt ist. Insbesondere bilden die gegenüberliegenden Wischarmseiten und die Deckseite ein im Wesentlichen U-förmiges Profil. Unter einer "Deckseite" soll in diesem Zusammenhang insbesondere eine Seite verstanden werden, die zumindest in einem Betriebszustand von der Fahrzeugscheibe und/oder dem am Wischarm befestigten Wischblatt abgewandt ist. Insbesondere verläuft die Deckseite zumindest im Wesentlichen parallel zur Fahrzeugscheibe und/oder zu einer von dem Wischblatt zu wischenden Oberfläche.

Des Weiteren wird vorgeschlagen, dass der zumindest eine erste Waschwasserschlauch an zumindest einem dritten Düsenelement der Düseneinheit angeordnet ist, wodurch vorteilhaft eine besonders gleichmäßige Wasserverteilung auf der Fahrzeugscheibe erreicht werden kann.

In einer weiteren Ausgestaltung wird vorgeschlagen, dass die Wischvorrichtung eine Waschwasserverteilereinheit aufweist, die an den zumindest einen ersten Waschwasserschlauch und den zumindest einen zweiten Waschwasserschlauch angeschlossen ist, wodurch Waschwasser vorteilhaft auf einfache Weise in die zumindest zwei Waschwasserschläuche eingeleitet werden kann. Unter einer "Waschwasserverteilereinheit" soll in diesem Zusammenhang insbesondere eine Einheit verstanden werden, die dazu vorgesehen ist, Waschwasser in zumindest zwei Waschwasserschläuche zu verteilen beziehungsweise einzuleiten. Bevorzugt ist die Waschwasserverteilereinheit dazu vorgesehen, Waschwasser selektiv in die zumindest zwei Waschwasserschläuche einzubringen. Bevorzugt ist die Waschwasserverteilereinheit dazu vorgesehen, an zumindest einen Waschwasserschlauch in einer Steckverbindung angeordnet zu werden.

Eine besonders gleichmäßige Waschwasserverteilung entlang eines Wischblatts kann erreicht werden, wenn die Düseneinheit dazu vorgesehen ist, Waschwasser zumindest teilweise im Wesentlichen parallel zu einer Wischarmlängsrichtung auszubringen. Unter "zumindest im Wesentlichen" soll in diesem Zusammenhang insbesondere mit einer Abweichung von weniger als 20°, bevorzugt von weniger als 10°, besonders bevorzugt von weniger als 5° verstanden werden. Unter einer "Wischarmlängsrichtung" soll dabei in diesem Zusammenhang insbesondere eine Richtung verstanden werden, die parallel zu einer Hauptlängserstreckung des Wischarms verläuft. Unter einer "Hauptlängserstreckung" soll in diesem Zusammenhang insbesondere eine größtmögliche Erstreckung verstanden werden. Unter einer "Erstreckung" eines Elements soll in diesem Zusammenhang insbesondere ein maximaler Abstand zweier Punkte einer senkrechten Projektion des Elements auf eine Ebene verstanden werden.

Weiterhin vorteilhaft ist die Düseneinheit dazu vorgesehen, Waschwasser zumindest teilweise fächerförmig auszubringen, wodurch eine besonders große Fahrzeugscheibenfläche mit Waschwasser benetzt werden kann. Dabei ist die Düseneinheit dazu vorgesehen, Waschwasser zumindest teilweise fächerförmig relativ zum Düsenelement, vom Wischarm und/oder vom Wischblatt auszubringen. Insbesondere ist die Düseneinheit dazu vorgesehen, Waschwasser auch ohne eine Relativbewegung zwischen der Düseneinheit und der Fahrzeugscheibe zumindest teilweise fächerförmig auszubringen. Unter "fächerförmig" soll in diesem Zusammenhang insbesondere strahlförmig in unterschiedliche Richtungen verstanden werden. Insbesondere weisen Wasserstrahlen jeweils einen Winkel von weniger als 95°, bevorzugt von weniger als 50°, besonders bevorzugt von weniger als 30° zueinander auf.

Eine besonders schnelle Montage der Wischvorrichtung kann erreicht werden, wenn die Düseneinheit dazu vorgesehen ist, zumindest teilweise mit dem Wischarm verrastet zu werden. Unter "verrastet" soll in diesem Zusammenhang insbesondere in einer Rastverbindung verbunden verstanden werden. Unter einer "Rastverbindung" soll in diesem Zusammenhang insbesondere eine Verbindung verstanden werden, bei welcher zumindest ein Rastelement in zumindest eine Rastausnehmung eingreift. Unter einem "Rastelement" soll in diesem Zusammenhang insbesondere ein federelastisches Element zur Herstellung einer Rastverbindung verstanden werden, das dazu vorgesehen ist, bei einer Montage elastisch ausgelenkt zu werden.

Weiterhin wird vorgeschlagen, dass bei einem Aufwärtswischen Waschwasser genau auf eine erste Seite von dem Wischblatt auf die Fahrzeugscheibe aufgetragen und bei einem Abwärtswischen Waschwasser genau auf eine zweite Seite von dem Wischblatt auf die Fahrzeugscheibe aufgetragen wird, die gegenüberliegend zur ersten Seite angeordnet ist, wodurch vorteilhaft Waschwasser bei gleichzeitig gutem Wischergebnis eingespart werden kann. Bevorzugt wird dabei das Waschwasser abwechselnd durch einen ersten Waschwasserschlauch und einen zweiten Waschwasserschlauch geführt.

### Zeichnung

Weitere Vorteile ergeben sich aus der folgenden Zeichnungsbeschreibung. In der Zeichnung sind drei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Wischvorrichtung mit einem Wischarm und einem Wischblatt in einer Seitenansicht,
- Fig. 2: die Wischvorrichtung nach Figur 1 mit dem Wischarm und dem Wischblatt in einer Draufsicht,
- Fig. 3: die Wischvorrichtung nach Figur 1 mit dem Wischblatt in einer Draufsicht,
- Fig. 4: eine perspektivische Ansicht einer alternativen Ausgestaltung eines ersten Düsenelements der Wischvorrichtung nach Figur 1,
- Fig. 5: das erste Düsenelement nach Figur 4 in einer Draufsicht,
- Fig. 6: das erste Düsenelement nach Figur 4 in einer Seitenansicht,
- Fig. 7: eine alternative Ausgestaltung einer Wischvorrichtung mit einem Wischblatt in einer Draufsicht und
- Fig. 8: eine alternative Ausgestaltung einer Wischvorrichtung mit einem Wischarm in einer Draufsicht.

### Beschreibung der Ausführungsbeispiele

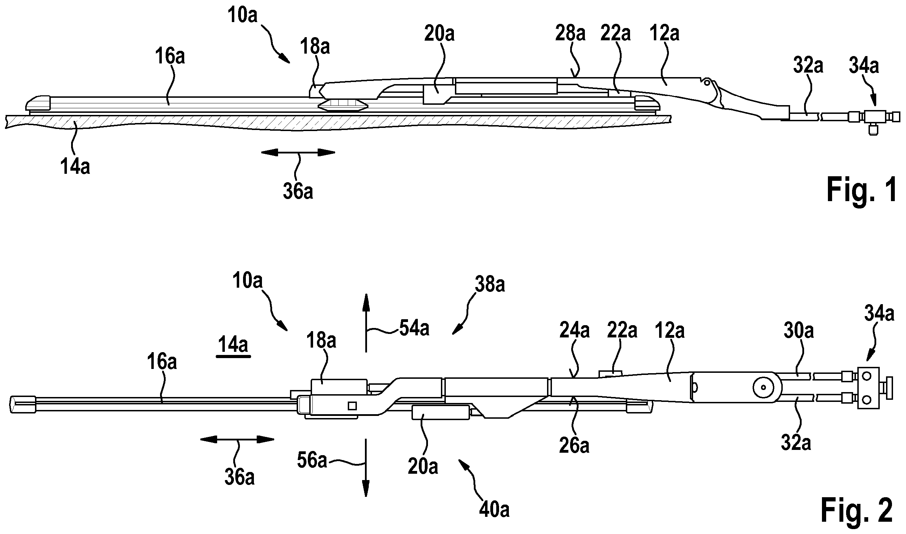

In den Figuren 1 und 2 ist ein erfindungsgemäßes Ausführungsbeispiel einer Wischvorrichtung mit einem Wischarm 12a und einem Wischblatt 16a in einem Betriebszustand gezeigt. Die Wischvorrichtung weist eine Düseneinheit 10a auf. Die Düseneinheit 10a ist im gezeigten Betriebszustand mit dem Wischarm 12a verrastet und zum Auftragen von Waschwasser auf eine Fahrzeugscheibe 14a eines nicht näher gezeigten Kraftfahrzeugs vorgesehen. Das Wischblatt 16a ist zum Wischen der Fahrzeugscheibe 14a vorgesehen.

Die Düseneinheit 10a trägt Waschwasser beidseitig von dem am Wischarm 12a befestigten Wischblatt 16a auf eine Fahrzeugscheibe 14a auf. Dazu weist die Düseneinheit 10a ein erstes Düsenelement 18a, ein zweites Düsenelement 20a und ein drittes Düsenelement 22a auf. Das erste Düsenelement 18a und das dritte Düsenelement 22a sind auf einer ersten Wischarmseite 24a des Wischarms 12a angeordnet. Das zweite Düsenelement 20a ist auf einer zweiten Wischarmseite 26a des Wischarms 12a angeordnet. Die zweite Wischarmseite 26a ist gegenüberliegend von der ersten Wischarmseite 24a angeordnet.

Das erste Düsenelement 18a, das zweite Düsenelement 20a und das dritte Düsenelement 22a sind getrennt voneinander ausgebildet. Des Weiteren sind das erste Düsenelement 18a, das zweite Düsenelement 20a und das dritte Düsenelement 22a unmittelbar am Wischarm 12a angeordnet. Ferner sind das erste Düsenelement 18a, das zweite Düsenelement 20a und das dritte Düsenelement 22a kontaktfrei beziehungsweise berührungslos vom Wischblatt 16a angeordnet. Das erste Düsenelement 18a, das zweite Düsenelement 20a und das dritte Düsenelement 22a sind aus einem Kunststoff hergestellt.

Die erste Wischarmseite 24a und die zweite Wischarmseite 26a sind über eine Deckseite 28a einer Deckwandung 58a des Wischarms 12a miteinander verbunden. Die Wischarmseiten 24a, 26a schließen mit der Deckseite 28a jeweils einen Winkel von 90° ein. Dadurch bilden die gegenüberliegenden Wischarmseiten 24a, 26a und die Deckseite 28a ein im Wesentlichen U-förmiges Profil. Das erste Düsenelement 18a ist unterhalb der Deckwandung 58a angeordnet. Genauer gesagt ist das erste Düsenelement 18a auf einer der Deckseite 28a entgegengesetzten Seite der Deckwandung 58a angeordnet.

Zur Versorgung der Düseneinheit 10a mit Waschwasser umfasst die Wischvorrichtung einen ersten Waschwasserschlauch 30a, der an dem ersten Düsenelement 18a und dem dritten Düsenelement 22a der Düseneinheit 10a angeordnet, beziehungsweise angeschlossen ist. Ferner weist die Wischvorrichtung einen zweiten Waschwasserschlauch 32a auf, der an dem zweiten Düsenelement 20a der Düseneinheit 10a angeordnet, beziehungsweise angeschlossen ist. Der erste Waschwasserschlauch 30a und der zweite Waschwasserschlauch 32a sind flexibel ausgebildet.

Die Wischvorrichtung weist eine Waschwasserverteilereinheit 34a auf, die an den ersten Waschwasserschlauch 30a und den zweiten Waschwasserschlauch 32a angeschlossen ist. Der erste Waschwasserschlauch 30a und der zweite Waschwasserschlauch 32a verlaufen zwischen den Wischarmseiten 24a, 26a des Wischarms 12a von der Düseneinheit 10a zur Waschwasserverteilereinheit 34a. Die Waschwasserverteilereinheit 34a ist auf nicht näher dargestellte Weise über eine Waschwasserpumpe mit einem Waschwassertank verbunden. Die Waschwasserverteilereinheit 34a leitet Waschwasser selektiv in den ersten Waschwasserschlauch 30a und den zweiten Waschwasserschlauch 32a ein. Eine Auswahl des mit Waschwasser zu versorgenden Waschwasserschlauchs 30a, 32a wird von einer nicht näher gezeigten Regel- und/oder Steuereinheit durchgeführt. Der erste Waschwasserschlauch 30a und der zweite Waschwasserschlauch 32a sind jeweils in einer Steckverbindung mit der Waschwasserverteilereinheit 34a verbunden. Ebenso sind der erste Waschwasserschlauch 30a und der zweite Waschwasserschlauch 32a in einer Steckverbindung mit der Düseneinheit 10a verbunden.

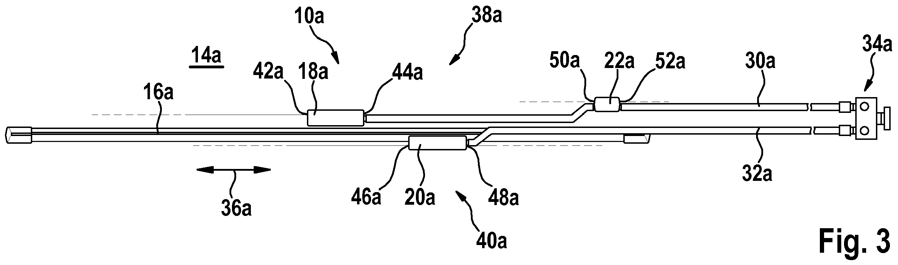

In der Figur 3 ist die Wischvorrichtung aus Gründen der Übersichtlichkeit ohne den Wischarm 12a dargestellt. Das erste Düsenelement 18a weist zwei Düsenöffnungen 42a, 44a auf. Die Düsenöffnungen 42a, 44a sind an gegenüberliegenden Seiten des ersten Düsenelements 18a angeordnet. Das zweite Düsenelement 20a weist ebenfalls zwei Düsenöffnungen 46a, 48a auf. Die Düsenöffnungen 46a, 48a sind an gegenüberliegenden Seiten des zweiten Düsenelements 20a angeordnet. Des Weiteren weist das dritte Düsenelement 22a zwei Düsenöffnungen 50a, 52a auf. Die Düsenöffnungen 50a, 52a sind an gegenüberliegenden Seiten des dritten Düsenelements 22a angeordnet.

Durch die gegenüberliegenden Anordnungen der Düsenöffnungen 42a, 44a, 46a, 48a, 50a, 52a bringt die Düseneinheit 10a Waschwasser in zwei entgegengesetzte Richtungen parallel zu einer Wischarmlängsrichtung 36a aus. Die Wischarmlängsrichtung 36a verläuft parallel zu einer Hauptlängserstreckung des Wischarms 12a. Das erste Düsenelement 18a und das dritte Düsenelement 22a tragen dabei das Waschwasser auf einer ersten Seite 38a von dem Wischblatt 16a aus. Das zweite Düsenelement 20a trägt das Waschwasser auf einer zweiten Seite 40a von dem Wischblatt 16a aus. Die erste Seite 38a und die zweite Seite 40a sind vom Wischblatt 16a in Wischarmlängsrichtung 36a voneinander getrennt.

Das erste Düsenelement 18a, das zweite Düsenelement 20a und das dritte Düsenelement 22a sind jeweils mit dem Wischarm 12a auf eine dem Fachmann bekannte Weise verrastet. Es ist in diesem Zusammenhang ebenfalls denkbar, dass das erste Düsenelement 18a, das zweite Düsenelement 20a und/oder das dritte Düsenelement 22a zusätzlich durch einen Stoffschluss, wie insbesondere eine Klebeverbindung, und/oder einen Reibschluss am Wischarm 12a gesichert sind.

Zum Auftragen von Waschwasser auf die Fahrzeugscheibe 14a wird das Waschwasser von der Düseneinheit 10a abwechselnd auf die zwei Seiten 38a, 40a von dem Wischblatt 16a aufgetragen. In einem Betriebszustand wird der Wischarm 12a geschwenkt und das daran befestigte Wischblatt 16a über die Fahrzeugscheibe 14a geführt. Die am Wischarm 12a befestigte Düseneinheit 10a bewegt sich aus einer Ausgangsposition in eine erste Bewegungsrichtung 54a. Die Düseneinheit 10a trägt hierbei das Waschwasser lediglich aus dem ersten Düsenelement 18a und dem zweiten Düsenelement 22a auf die erste Seite 38a aus. Nach einem Erreichen einer Wendelage bewegt sich die Düseneinheit 10a in einer zweiten Bewegungsrichtung 56a zur Ausgangsposition zurück. Die zweite Bewegungsrichtung 56a ist entgegengesetzt zur ersten Bewegungsrichtung 54a ausgerichtet, das heißt um 180° gedreht. Die Düseneinheit 10a trägt hierbei das Waschwasser lediglich aus dem zweiten Düsenelement 20a auf die zweite Seite 40a aus.

Somit wird bei einem Aufwärtswischen Waschwasser genau auf die erste Seite 38a von dem Wischblatt 16a auf die Fahrzeugscheibe 14a aufgetragen und bei einem Abwärtswischen Waschwasser genau auf die zweite Seite 40a von dem Wischblatt 16a auf die Fahrzeugscheibe 14a aufgetragen, die gegenüberliegend zur ersten Seite 38a angeordnet ist. Dabei wird das Waschwasser abwechselnd durch den ersten Waschwasserschlauch 30a und den zweiten Waschwasserschlauch 32a geführt.

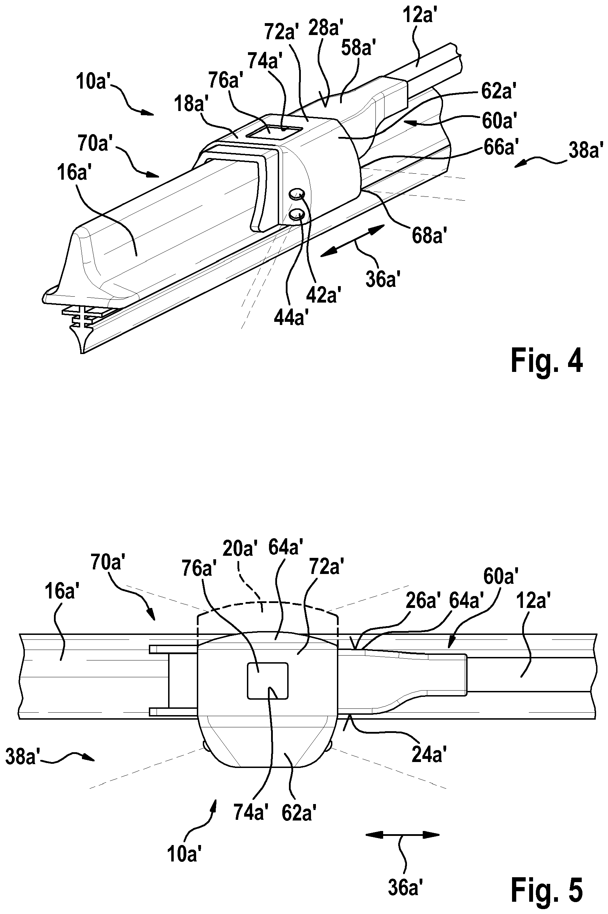

Die Figuren 4 bis 6 zeigen eine alternative Ausgestaltung eines ersten Düsenelements 18a'. Das gezeigte erste Düsenelement 18a' ist an einem Wischarmadapter 60a' des Wischarms 12a' angeordnet. Genauer gesagt ist das erste Düsenelement 18a' mit dem Wischarmadapter 60a' des Wischarms 12a' verrastet. Dazu weist das erste Düsenelement 18a' zumindest ein nicht dargestelltes Rastelement auf, welches mit zumindest einer nicht dargestellten Rastausnehmung im Wischarmadapter 60a' korrespondiert. Das erste Düsenelement 18a' schließt bündig mit einem Wischblattadapter 70a' des Wischblatts 16a' ab. Das Düsenelement 18a' weist in einer Düsendeckwandung 72a' eine Montageöffnung 74a' auf. Die Montageöffnung 74a' ist mit einem Rastmittel 76a' des Wischblattadapters 70a' bei einer Montage formschlüssig verbindbar. Durch Betätigen des Rastmittels 76a', das heißt durch ein Auslenken des Rastmittels 76a' in Richtung des Wischblatts 16a', lässt sich die formschlüssige Verbindung lösen. Der Wischarmadapter 60a' ist dann relativ zum Wischblattadapter 70a' in eine Wischarmlängsrichtung 36a' bewegbar.

Das erste Düsenelement 18a' liegt zumindest teilweise an einer Deckseite 28a' einer Deckwandung 58a' des Wischarms 12a' an. Ferner weist das erste Düsenelement 18a' zwei Seitenschürzen 62a', 64a' auf. Die Seitenschürzen 62a', 64a' umgreifen teilweise den Wischarmadapter 60a' seitlich. Das erste Düsenelement 18a' weist vier Düsenöffnungen 42a', 44a', 66a', 68a' auf. Die vier Düsenöffnungen 42a', 44a', 66a', 68a' sind in einer Seitenschürze 62a' der zwei Seitenschürzen 62a', 64a' angeordnet.

Jeweils zwei der vier Düsenöffnungen 42a', 44a', 66a', 68a' sind in Wischarmlängsrichtung 36a' betrachtet an voneinander abgewandten Seiten des ersten Düsenelements 18a' angeordnet. Die Wischarmlängsrichtung 36a' verläuft parallel zu einer Hauptlängserstreckung des Wischarms 12a'. Durch die gegenüberliegenden Anordnungen der Düsenöffnungen 42a', 44a', 66a', 68a' bringt die Düseneinheit 10a' Waschwasser in zwei entgegengesetzte Richtungen parallel zur Wischarmlängsrichtung 36a' aus. Somit ergeben sich Sprührichtungen, in welche Waschwasser aus den jeweils zwei der vier Düsenöffnungen 42a', 44a', 66a', 68a' austritt, die parallel zueinander verlaufen. Alternativ können die Sprührichtungen auch einen spitzen Winkel zueinander einschließen. Das erste Düsenelement 18a' trägt dabei das Waschwasser auf einer ersten Seite 38a' von dem Wischblatt 16a' auf.

Wie in der Figur 5 angedeutet, ist es prinzipiell auch denkbar, dass ein zweites Düsenelement 20a' einstückig mit dem ersten Düsenelement 18a' ausgebildet ist. Das erste Düsenelement 18a' ist dabei auf einer ersten Wischarmseite 24a' des Wischarms 12a' angeordnet. Das zweite Düsenelement 20a' ist auf einer zweiten Wischarmseite 26a' des Wischarms 12a' angeordnet. Die zweite Wischarmseite 26a' ist gegenüberliegend von der ersten Wischarmseite 24a' angeordnet. Weiterhin ist es denkbar, dass das zweite Düsenelement 20a' zumindest zwei Düsenöffnungen 46a', 48a' aufweist.

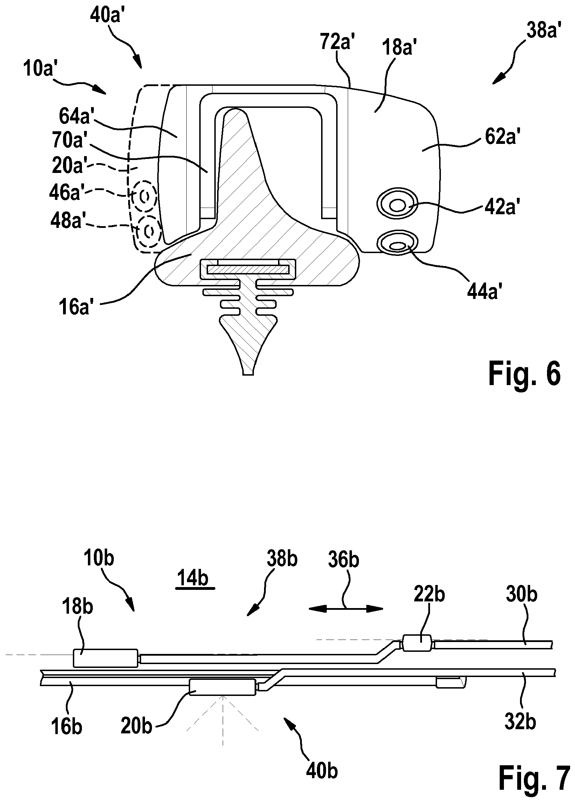

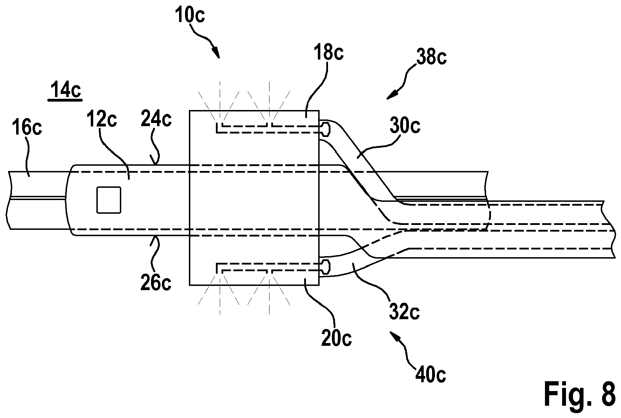

In den Figuren 7 und 8 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 6, verwiesen werden kann. Zur Unterscheidung der Ausführungsbeispiele ist der Buchstabe a den Bezugszeichen des Ausführungsbeispiels in den Figuren 1 bis 6 nachgestellt. In den Ausführungsbeispielen der Figuren 7 und 8 ist der Buchstabe a durch die Buchstaben b und c ersetzt.

Die Figur 7 zeigt eine erfindungsgemäße Wischvorrichtung mit einer Düseneinheit 10b, die zur Anordnung an einem hier nicht dargestellten Wischarm und zum Auftragen von Waschwasser auf eine Fahrzeugscheibe 14b vorgesehen ist. Die Düseneinheit 10b trägt Waschwasser beidseitig von dem am Wischarm befestigten Wischblatt 16b auf die Fahrzeugscheibe 14b auf.

Dazu weist die Düseneinheit 10b ein erstes Düsenelement 18b, ein zweites Düsenelement 20b und ein drittes Düsenelement 22b auf. Das erste Düsenelement 18b und das dritte Düsenelement 22b sind auf einer ersten Wischarmseite 24b des Wischarms angeordnet. Das zweite Düsenelement 20b ist auf einer zweiten Wischarmseite 26b des Wischarms angeordnet. Die zweite Wischarmseite 26b ist gegenüberliegend von der ersten Wischarmseite 24b angeordnet.

Zur Versorgung der Düseneinheit 10b mit Waschwasser umfasst die Wischvorrichtung einen ersten Waschwasserschlauch 30b, der an dem ersten Düsenelement 18b und dem dritten Düsenelement 22b der Düseneinheit 10b angeordnet, beziehungsweise angeschlossen ist. Ferner weist die Wischvorrichtung einen zweiten Waschwasserschlauch 32b auf, der an dem zweiten Düsenelement 20b der Düseneinheit 10b angeordnet, beziehungsweise angeschlossen ist. Der erste Waschwasserschlauch 30b und der zweite Waschwasserschlauch 32b sind flexibel ausgebildet.

Im Gegensatz zum ersten Ausführungsbeispiel weist das zweite Düsenelement 20b Düsenöffnungen 46b, 48b auf, die auf einer gleichen Seite angeordnet sind und einen kegelförmigen Auslass aufweisen. Somit ergibt sich auch ohne eine Bewegung der Düseneinheit 10b ein fächerförmiger Wasserstrahl beim Austragen von Waschwasser. In anderen Worten ist die Düseneinheit 10b dazu vorgesehen, Waschwasser teilweise fächerförmig auf die Fahrzeugscheibe 14b auszubringen. Der Wasserstrahl weist dabei einen Sprühwinkel von 90° auf. Es ist in diesem Zusammenhang jedoch auch denkbar, einen anderen geeigneten Sprühwinkel zur Auftragung von Waschwasser zu verwenden.

Die Figur 8 zeigt ein weiteres Ausführungsbeispiel einer erfindungsgemäßen Wischvorrichtung mit einer Düseneinheit 10c, die zur Anordnung an einem Wischarm 12c und zum Auftragen von Waschwasser auf eine Fahrzeugscheibe 14c vorgesehen ist. Die Düseneinheit 10c trägt Waschwasser beidseitig von dem am Wischarm 12c befestigten Wischblatt 16c auf die Fahrzeugscheibe 14c auf.

Dazu weist die Düseneinheit 10c ein erstes Düsenelement 18c und ein zweites Düsenelement 20c auf. Das erste Düsenelement 18c ist auf einer ersten Wischarmseite 24c des Wischarms 12c angeordnet. Das zweite Düsenelement 20c ist auf einer zweiten Wischarmseite 26c des Wischarms 12c angeordnet. Die zweite Wischarmseite 26c ist gegenüberliegend von der ersten Wischarmseite 24c angeordnet.

Zur Versorgung der Düseneinheit 10c mit Waschwasser umfasst die Wischvorrichtung einen ersten Waschwasserschlauch 30c, der an dem ersten Düsenelement 18c der Düseneinheit 10c angeordnet, beziehungsweise angeschlossen ist. Ferner weist die Wischvorrichtung einen zweiten Waschwasserschlauch 32c auf, der an dem zweiten Düsenelement 20c der Düseneinheit 10c angeordnet, beziehungsweise angeschlossen ist. Der erste Waschwasserschlauch 30c und der zweite Waschwasserschlauch 32c sind flexibel ausgebildet.

Im Gegensatz zum ersten Ausführungsbeispiel sind das erste Düsenelement 18c und das zweite Düsenelement 20c einstückig miteinander ausgebildet. Das erste Düsenelement 18c und das zweite Düsenelement 20c tragen beide das Waschwasser fächerförmig auf die Fahrzeugscheibe 14c auf.

## Patentansprüche

1. Wischvorrichtung mit einem Wischarmadapter (60a'), welcher an einem Wischarm (12a') anordenbar ist und mit einem Wischblattadapter (70a'), welcher an einem Wischblatt (16a') anordenbar ist und mit einer Düseneinheit (10a - 10c), die zur Anordnung an dem Wischarm (12a; 12c) und zum Auftragen von Waschwasser auf eine Fahrzeugscheibe (14a - 14c) vorgesehen ist, wobei die Düseneinheit (10a - 10c) dazu vorgesehen ist, in einem Betriebszustand Waschwasser beidseitig von einem am Wischarm (12a - 12c) befestigten Wischblatt (16a - 16c) auf die Fahrzeugscheibe (14a - 14 c) aufzutragen, wobei ein erstes Düsenelement (18a') der Düseneinheit (10a - 10c) mit dem Wischarmadapter (60a') des Wischarms (12a') verrastet ist, wobei das erste Düsenelement (18a') zumindest ein Rastelement aufweist, welches mit einer Rastausnahmung im Wischarmadapter (60a') korrespondiert, **dadurch gekennzeichnet dass**, das erste Düsenelement (18a') bündig mit dem Wischblattadapter (70a') des Wischblatts (16a') aufschließt, und das Düsenelement (18a') in einer Düsendeckwandung (72a') eine Montageöffnung (74a') aufweist, welche dazu vorgesehen ist, mit einem Rastmittel (76a') eines Wischblattadapters (70a') bei einer Montage formschlüssig verbindbar zu sein und wobei sich durch Auslenken des Rastmittels (76a') in Richtung des Wischblatts (16a') die formschlüssige Verbindung lösen lässt, so dass der Wischarmadapter (60a') dann relativ zu dem Wischblattadapter (70a') zumindest in eine Wischarmlängsrichtung (36a') bewegbar ist.

2. Wischvorrichtung nach Anspruch 1, **gekennzeichnet durch** zumindest einen ersten Waschwasserschlauch (30a - 30c), der an zumindest dem ersten Düsenelement (18a - 18c, 22a; 22b) der Düseneinheit (10a - 10c) angeordnet ist.

3. Wischvorrichtung nach Anspruch 2, **gekennzeichnet durch** zumindest einen zweiten Waschwasserschlauch (32a - 32c), der an zumindest einem zweiten Düsenelement (20a - 20c) der Düseneinheit (10a - 10c) angeordnet ist.

4. Wischvorrichtung nach Anspruch 3, **dadurch gekennzeichnet, dass** das zumindest eine erste Düsenelement (18a - 18c, 22a; 22b) und das zumindest eine zweite Düsenelement (20a - 20c) dazu vorgesehen sind, an gegenüberliegenden Wischarmseiten (24a - 24c, 26a - 26c) angeordnet zu werden.

5. Wischvorrichtung zumindest nach Anspruch 2, **dadurch gekennzeichnet, dass** der zumindest eine erste Waschwasserschlauch (30a; 30b) an zumindest einem dritten Düsenelement (22a; 22b) der Düseneinheit (10a; 10b) angeordnet ist.

6. Wischvorrichtung zumindest nach Anspruch 2 und 3, **gekennzeichnet durch** eine Waschwasserverteilereinheit (34a), die an den zumindest einen ersten Waschwasserschlauch (30a) und den zumindest einen zweiten Waschwasserschlauch (32a) angeschlossen ist.

7. Wischvorrichtung nach einem der vorhergehenden Ansprüche, **dadurch gekennzeichnet, dass** die Düseneinheit (10a) dazu vorgesehen ist, Waschwasser zumindest teilweise im Wesentlichen parallel zu einer Wischarmlängsrichtung (36a) auszubringen.

8. Wischvorrichtung nach einem der vorhergehenden Ansprüche, **dadurch gekennzeichnet, dass** die Düseneinheit (10b; 10c) dazu vorgesehen ist, Waschwasser zumindest teilweise fächerförmig auszubringen.

9. Scheibenwischeranlage mit einen Wischarm (12a - 12c) und einen Wischblatt (16a - 16c) und eine Wischvorrichtung gemäß einer der vorhergehenden Ansprüchen.

## Claims

1. Wiper device having a wiper-arm adaptor (60a'), which is arrangeable on a wiper arm (12a'), and having a wiper-blade adaptor (70a'), which is arrangeable on a wiper blade (16a'), and having a nozzle unit (10a-10c), which is intended for arrangement on the wiper arm (12a; 12c) and for application of washing water to a vehicle window (14a-14c), wherein the nozzle unit (10a-10c) is intended for application of washing water to the vehicle window (14a-14c) on both sides of a wiper blade (16a-16c), which is fastened to the wiper arm (12a-12c), in an operating state, wherein a first nozzle element (18a') of the nozzle unit (10a-10c) is latched to the wiper-arm adaptor (60a') of the wiper arm (12a'), wherein the first nozzle element (18a') has at least one latching element which corresponds to a latching cutout in the wiper-arm adaptor (60a'), **characterized in that** the first nozzle element (18a') finishes flush with the wiper-blade adaptor (70a') of the wiper blade (16a'), and the nozzle element (18a') has an assembly opening (74a') in a nozzle top wall (72a'), which assembly opening is intended to be connectable in a form-fitting manner to a latching means (76a') of a wiper-blade adaptor (70a') during an assembly, and wherein the form-fitting connection can be released by deflection of the latching means (76a') in the direction of the wiper blade (16a'), so that the wiper-arm adaptor (60a') is then movable relative to the wiper-blade adaptor (70a') at least in a wiper-arm longitudinal direction (36a').

2. Wiper device according to Claim 1, **characterized by** at least one first washing-water hose (30a-30c) which is arranged on at least the first nozzle element (18a-18c, 22a; 22b) of the nozzle unit (10a-10c) .

3. Wiper device according to Claim 2, **characterized by** at least one second washing-water hose (32a-32c) which is arranged on at least a second nozzle element (20a-20c), of the nozzle unit (10a-10c).

4. Wiper device according to Claim 3, **characterized in that** the at least one first nozzle element (18a-18c, 22a; 22b) and the at least one second nozzle element (20a-20c) are intended to be arranged on opposite wiper-arm sides (24a-24c, 26a-26c).

5. Wiper device at least according to Claim 2, **characterized in that** the at least one first washing-water hose (30a; 30b) is arranged on at least a third nozzle element (22a; 22b) of the nozzle unit (10a; 10b).

6. Wiper device at least according to Claim 2 or 3, **characterized by** a washing-water distribution unit (34a) which is connected to the at least one first washing-water hose (30a) and to the at least one second washing-water hose (32a).

7. Wiper device according to one of the preceding claims, **characterized in that** the nozzle unit (10a) is intended for discharge of washing water at least partially substantially parallel to a wiper-arm longitudinal direction (36a).

8. Wiper device according to one of the preceding claims, **characterized in that** the nozzle unit (10b; 10c) is intended for discharge of washing water at least partially in a fan-like manner.

9. Window-wiper system having a wiper arm (12a-12c) and having a wiper blade (16a-16c) and having a wiper device according to one of the preceding claims.

## Revendications

1. Dispositif d'essuie-glace avec un adaptateur de bras d'essuie-glace (60a') qui peut être agencé sur un bras d'essuie-glace (12a') et avec un adaptateur de balai d'essuie-glace (70a') qui peut être agencé sur un balai d'essuie-glace (16a') et avec une unité de buse (10a - 10c) qui est prévue pour être agencée sur le bras d'essuie-glace (12a ; 12c) et pour appliquer de l'eau de lavage sur une vitre de véhicule (14a - 14c), l'unité de buse (10a - 10c) étant prévue pour appliquer, dans un état de fonctionnement, de l'eau de lavage des deux côtés d'un balai d'essuie-glace (16a - 16c) fixé au bras d'essuie-glace (12a - 12c) sur la vitre de véhicule (14a - 14c), un premier élément de buse (18a') de l'unité de buse (10a - 10c) étant enclenché avec l'adaptateur de bras d'essuie-glace (60a') du bras d'essuie-glace (12a'), le premier élément de buse (18a') présentant au moins un élément d'enclenchement qui correspond à un évidement d'enclenchement dans l'adaptateur de bras d'essuie-glace (60a'), **caractérisé en ce que** le premier élément de buse (18a') est en affleurement avec l'adaptateur de balai d'essuie-glace (70a') du balai d'essuie-glace (16a'), et l'élément de buse (18a') présente dans une paroi de recouvrement de buse (72a') une ouverture de montage (74a') qui est prévue pour pouvoir être reliée par complémentarité de forme à un moyen d'enclenchement (76a') d'un adaptateur de balai d'essuie-glace (70a') lors d'un montage, et dans lequel la liaison par complémentarité de forme peut être supprimée par déviation du moyen d'enclenchement (76a') en direction du balai d'essuie-glace (16a'), de telle sorte que l'adaptateur de bras d'essuie-glace (60a') peut alors être déplacé par rapport à l'adaptateur de balai d'essuie-glace (70a') au moins dans une direction longitudinale de bras d'essuie-glace (36a').

2. Dispositif d'essuie-glace selon la revendication 1, **caractérisé par** au moins un premier tuyau d'eau de lavage (30a - 30c) qui est agencé sur au moins le premier élément de buse (18a - 18c, 22a ; 22b) de l'unité de buse (10a - 10c) .

3. Dispositif d'essuie-glace selon la revendication 2, **caractérisé par** au moins un deuxième tuyau d'eau de lavage (32a - 32c) qui est agencé sur au moins un deuxième élément de buse (20a - 20c) de l'unité de buse (10a - 10c) .

4. Dispositif d'essuie-glace selon la revendication 3, **caractérisé en ce que** l'au moins un premier élément de buse (18a - 18c, 22a ; 22b) et l'au moins un deuxième élément de buse (20a - 20c) sont prévus pour être agencés sur des côtés opposés du bras d'essuie-glace (24a - 24c, 26a - 26c).

5. Dispositif d'essuie-glace au moins selon la revendication 2, **caractérisé en ce que** l'au moins un premier tuyau d'eau de lavage (30a ; 30b) est agencé sur au moins un troisième élément de buse (22a ; 22b) de l'unité de buse (10a ; 10b).

6. Dispositif d'essuie-glace au moins selon les revendications 2 et 3, **caractérisé par** une unité de répartition d'eau de lavage (34a) qui est raccordée à l'au moins un premier tuyau d'eau de lavage (30a) et à l'au moins un deuxième tuyau d'eau de lavage (32a).

7. Dispositif d'essuie-glace selon l'une quelconque des revendications précédentes, **caractérisé en ce que** l'unité de buse (10a) est prévue pour distribuer l'eau de lavage au moins partiellement de manière essentiellement parallèle à une direction longitudinale de bras d'essuie-glace (36a).

8. Dispositif d'essuie-glace selon l'une quelconque des revendications précédentes, **caractérisé en ce que** l'unité de buse (10b ; 10c) est prévue pour distribuer l'eau de lavage au moins partiellement en forme d'éventail.

9. Installation d'essuie-glace avec un bras d'essuie-glace (12a - 12c) et un balai d'essuie-glace (16a - 16c) et un dispositif d'essuie-glace selon l'une des revendications précédentes.
